# EUROPEAN PATENT APPLICATION

(11) **EP 4 116 242 A1**
(43) Date of publication of application: **11.01.2023**
(21) Application number: 22182747.0
(22) Date of filing: 04.07.2022
(51) Int. Cl.: B65G 60/00, B65G 61/00

(54) **MOVEMENT APPARATUS FOR MOVING PANELS OR SIMILAR PIECES**

(30) Priority: 06.07.2021 IT 202100017825
(71) Applicant: SCM Group S.p.A., 47921 Rimini (RN) (IT)
(72) Inventor: BATTILANI, Marco, 47921 RIMINI (IT)
(74) Representative: Tiburzi, Andrea

(57) **Abstract**

The present invention relates to a movement system (1, B; 100, B; 200, B; 300, B; 400, B) comprising: at least one track (B) directed along a first axis (X), said at least one track (B) comprising at least a first rail (B1) fixed to a portion of ground (S) and at least a second rail (B2) parallel to said at least a first rail (B1) and positioned at a predetermined distance from said at least a first rail (B1); a movement apparatus (1; 100; 200; 300; 400) for moving panels (P) or similar pieces, comprising: a carriage (2, 5, 6, 7, 8; 102,105,106, 107, 108; 200; 300, 304, 306; 400, 403, 404, 406, 407) where at least a first face (2a) is defined, said carriage (2, 5, 6, 7, 8; 102, 105, 106, 107, 108; 200; 300, 304, 306; 400, 403, 404, 406, 407) being positioned on said at least one track (B) and being movable along said first axis (X), said at least a first face (2a) being transversal to the ground (S) when said carriage (2, 5, 6, 7, 8; 102, 105, 106, 107, 108; 200; 300, 304, 306; 400, 403, 404, 406, 407) is positioned on said at least one track (B); at least one cross member (14; 112; 201; 301; 410) connected to said carriage (2, 5, 6, 7, 8; 102, 105, 106, 107, 108; 200; 300, 304, 306; 400, 403, 404, 406, 407) in such a way as to protrude from said at least a first face (2a) of said carriage (2, 5, 6, 7, 8; 102, 105, 106, 107, 108; 200; 300, 304, 306; 400, 403, 404, 406, 407); and at least one gripping device (15; 113; 411) for gripping at least one panel (P) or similar piece, wherein said at least one gripping device (15; 113; 411) is connected to said at least one cross member (14; 112; 201; 301; 410) and comprises at least one gripping member (16) configured to engage, in use, with said at least one panel (P) or similar piece in a removable manner, said at least one gripping device (15; 113; 411) being also movable with respect to said carriage (2, 5, 6, 7, 8; 102, 105, 106, 107, 108; 200; 300, 304, 306; 400, 403, 404, 406, 407) in such a way as to allow, in use, the movement of at least one panel (P) or similar piece.

## Description

The present invention relates to a system for moving panels or similar pieces.

More in detail, the invention relates to a system for moving panels or similar pieces in a ground storage.

In the following, the description will be addressed to the movement of wooden panels, but it is clear that the same should not be considered limited to this specific use, as it can also extend to pieces of other shapes and/or nature.

Currently there are panel movement systems for ground storages, which include a fixed structure formed by two supporting substructures, parallel to each other and anchored to the ground.

At the top of these support substructures, linear guiding elements are provided to guide the movement of a movable crosspiece along a first axis, in accordance with the prevailing direction of development of the aforementioned support substructures.

This movable cross member is contained within the space defined by the two support substructures, without therefore protruding from it.

A gripping apparatus is also mounted on the crosspiece, in a movable way along a second axis orthogonal to said first axis, for gripping the panels, arranged on the ground or any supports, and moving them within the space of the aforementioned ground storage.

The main object of the present invention is to provide a system for moving panels or similar workpieces, which is highly flexible in terms of the relative possibilities of use.

A further object of the invention is to provide a system for moving panels or similar pieces which allows moving panels or similar objects between different areas of the same storage in a fast and efficient manner.

Another object of the invention is to provide a system for moving panels or similar pieces that is easy to make and install on site.

A further object of the present invention is to provide a system for moving panels or similar workpieces that has a structure such as to be able to modify it in a simple and quick way after the relative initial installation.

It is therefore specific object of the present invention a movement system comprising: at least one track directed along a first axis, said at least one track comprising at least a first rail fixed to a portion of ground and at least a second rail parallel to said at least a first rail and positioned at a predetermined distance from said at least a first rail; a movement apparatus for moving panels or similar pieces, comprising: a carriage where at least a first face is defined, said carriage being positioned on said at least one track and being movable along said first axis, said at least a first face being transversal to the ground when said carriage is positioned on said at least one track; at least one cross member connected to said carriage in such a way as to protrude from said at least a first face of said carriage; and at least one gripping device for gripping at least one panel or similar piece, wherein said at least one gripping device is connected to said at least one cross member and comprises at least one gripping member configured to engage, in use, with said at least one panel or similar piece in a removable manner, said at least one gripping device being also movable with respect to said carriage in such a way as to allow, in use, the movement of at least one panel or similar piece.

Conveniently according to the invention, in said carriage at least a second face opposite to said first face may be defined, and said at least one cross member may protrude from said at least a second face of said carriage.

Alternatively according to the invention, in said carriage at least a second face opposite to said first face may be defined, and said movement system may comprise at least a second cross member which is different from said at least one cross member and projects from said at least a second face of said carriage.

Advantageously according to the invention, said at least one cross member may be connected with said carriage in a rigid or movable way along a second axis substantially orthogonal to said first axis.

Preferably according to the invention, said at least one cross member may have a main direction of extension and said at least one gripping device may be connected with said at least one cross member in a movable way along said main direction of extension.

Further according to the invention, said at least one gripping device may be movable according to a substantially vertical third axis.

Still according to the invention, said at least one gripping device may comprise an articulated arm equipped with actuator means.

Conveniently said at least one cross member may be rotatable around a third axis substantially orthogonal to said first axis.

Advantageously according to the invention, said movement apparatus may comprise sensor means for detecting the presence of obstacles along said track.

Further according to the invention, said at least a second rail may be fixed to a portion of said ground parallel to said at least a first rail.

Alternatively according to the invention, said at least a second rail may be positioned on a plane parallel to said ground and spaced from said ground.

Alternatively according to the invention, said at least a second rail may be positioned above said at least a first rail; wherein said at least a first rail and said at least a second rail may lie on a plane substantially orthogonal to said ground.

Preferably according to the invention, said at least one gripping member may comprise a suction cup.

The present invention will be now described, for illustrative but not limitative purposes, according to its preferred embodiments, with particular reference to the figures of the enclosed drawings, wherein:
figure 1 is a first perspective view of a moving system for a ground storage, according to a first embodiment of the present invention;
figure 2 is a second perspective view of the movement system shown in figure 1;
figure 3 is a rear view of the movement system for a ground storage shown in figures 1 and 2, in a further position;
figure 4 is a side view of the movement system for a ground storage illustrated in figure 3;
figure 5 is a top plan view of the movement system for a ground storage shown in figures 3 and 4;
figure 6 is a perspective view of the system shown in figures 1-5, in a position for picking up a panel from a predetermined area of the storage;
figure 7 is a partial perspective view of the movement system shown in figures 1-6, in which the panel, previously taken from a predetermined area of the storage, is placed on a cutting machine arranged inside the storage area same;
figure 8 is a perspective view of a movement system for a storage on the ground, according to a second embodiment of the present invention;
figure 9 is a perspective view of a movement system for a storage on the ground, according to a third embodiment of the invention;
figure 10 is a perspective view of a movement system for a ground storage, according to a fourth embodiment of the invention; and
figure 11 is a perspective view of a movement system for a storage on the ground, according to a fifth embodiment of the invention.

In the various figures, similar parts will be indicated with the same numerical references.

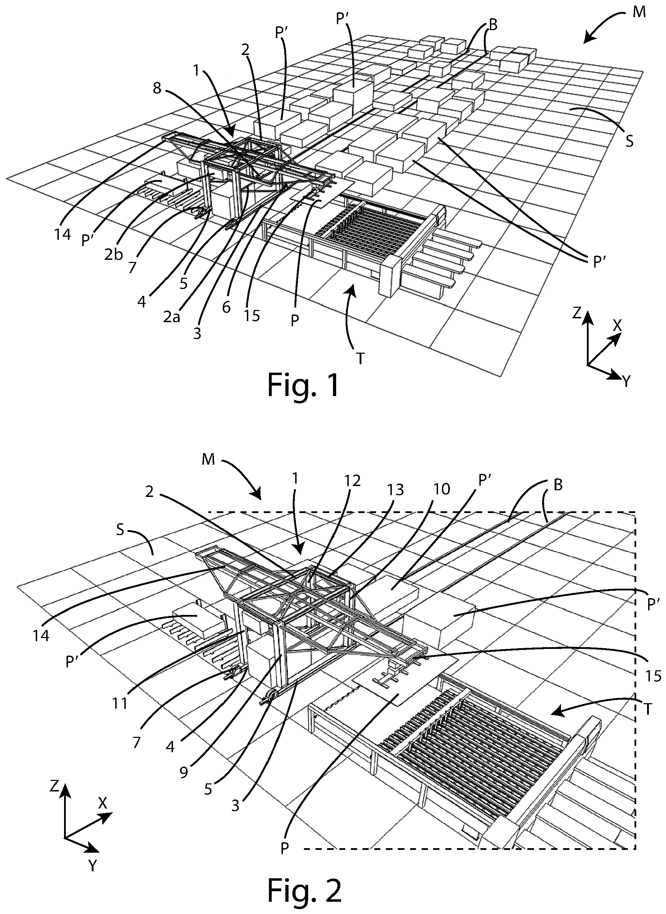

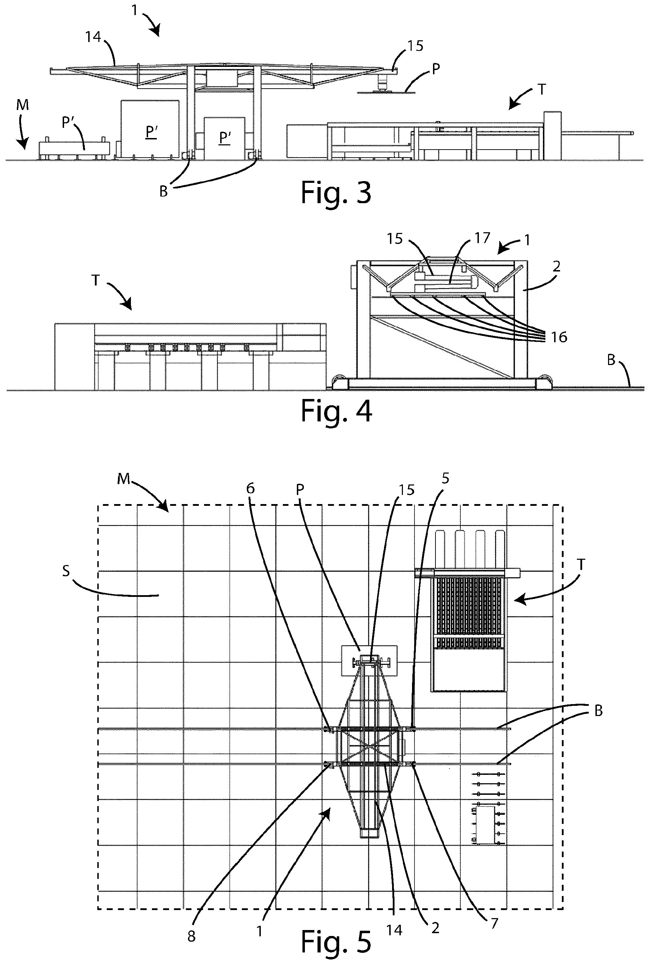

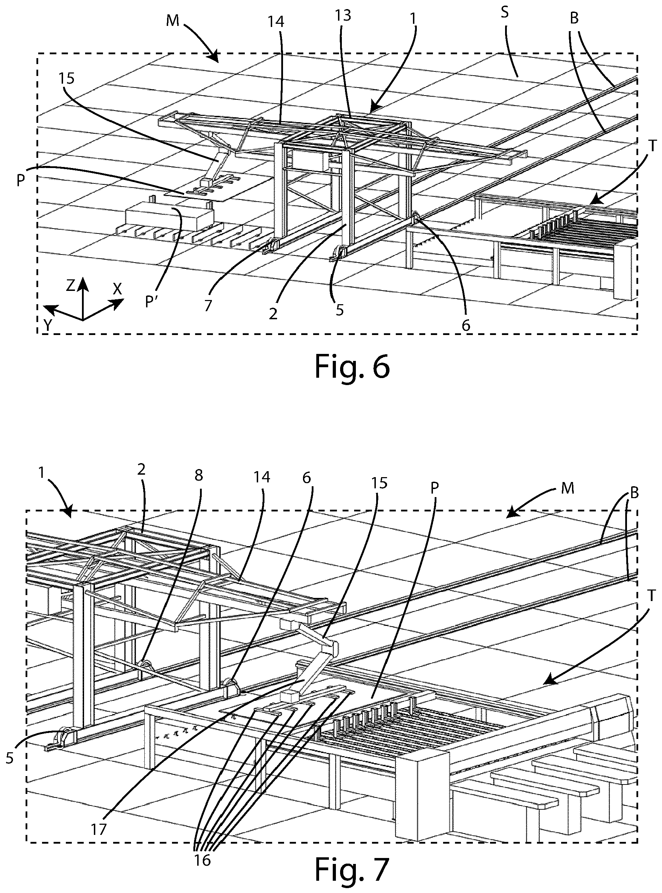

With reference to figures 1-7, M indicates ground storage for storing panels P, preferably arranged on one or more stacks P'.

On the ground S of the ground storage M there is a track B composed of two mutually spaced parallel rails, along which a first movement apparatus 1 can move according to a first embodiment of the present invention, for moving the panels P stored in the said ground storage M.

This track B, being fixed to the ground S, is not subject to bending.

The first movement apparatus 1 comprises a carriage, in particular a frame 2 equipped with a first lower longitudinal member 3, and a second lower longitudinal member 4, parallel, on each of which two wheels 5, 6, 7, 8 engaged to the track B are rotatably movably mounted along a first axis X.

The aforesaid wheels 5, 6, 7, 8 can be motorized and connected to a control unit to allow their actuation.

From each lower longitudinal member 3, 4 two respective uprights 9, 10, 11, 12 rise vertically according to a third axis Z, orthogonal to said first axis X, parallel to each other and arranged at the corners of a rectangle or square.

On the top of the uprights 9, 10, 11, 12 there is an upper frame 13, having a rectangle or square shape, which joins, in fact, the top ends of said uprights 9, 10, 11, 12.

Therefore, the frame 2, composed of two lower longitudinal members 3, 4, with the four uprights 9, 10, 11, 12, and the upper frame 13 have, overall, a castle shape, namely substantially parallelepiped, defining inside it a through space according to the first axis X and according to a second axis Y, orthogonal to the first axis X, so that the first handling apparatus 1 can move freely on the track B even if one or more panels P or stacks of panels P' are arranged between the rails of the latter.

A transverse transversal structure 14 is fixed to the upper part of the frame 2, directed mainly according to the aforementioned second axis Y and to the third axis Z, and protruding from the two opposite sides 2a, 2b of the frame 2 lying on respective planes orthogonal to the ground S and parallel to the track B.

A gripping device 15 is connected, in a movable way along said second axis Y, to the transversal structure 14, comprising, in its lower part, a plurality of suction cups 16, facing downwards and substantially coplanar with each other according to an XY plane, to grasp a panel P at its upper face.

Alternatively or in addition to said plurality of suction cups 16, a different gripping system can be provided, such as for example a jaw or gripper system.

This gripping device 15 also includes an articulated arm 17, equipped with actuator means, for moving the aforementioned plurality of suction cups 16 along said third axis Z.

As an alternative to the aforementioned articulated arm 17, it is possible to provide other movement systems, such as example a telescopic guides system.

The gripping device 15, or a part of it, can also be rotatable around an rotation axis parallel to the third axis Z, so as to be able to rotate the panel P gripped by the gripping device 15 around this same axis.

Based on a technical variant of the first movement apparatus 1, the transversal structure 14 can be connected to the frame 2 in a movable manner according to said second axis Y; in this case, the gripping device 15 could be connected rigidly or in a movable manner to the transversal structure 14 along the second axis Y, as mentioned above.

Although not shown, in the first movement apparatus 1 there are provided actuator means and/or motor means to allow the movement of the gripping device 15 along the transversal structure 14 according to the second axis Y, lifting (i.e. retraction) and lowering (i.e. extension) of the gripping device 15, and its rotation around the third axis Z, and the possible displacement of the transversal structure 14 with respect to the frame 2 according to the second axis Y.

By lowering the articulated arm 17, or rather extending it downwards, it is therefore possible to grasp a panel P by means of the plurality of suction cups 16 and move it, if necessary, along the first axis X by moving the entire first movement apparatus 1 on the track B and/or along the second axis Y, by moving the gripping device 15 on the transversal structure 14, and, if necessary, through passing the gripping device 15 with the relative panel P through the aforementioned compartment of the frame 2.

Sensor means (not shown) can also be provided in the first movement apparatus sensor 1, to detect the possible presence of obstacles along the route of the track B, which could hinder or interrupt the advancement of the first movement apparatus 1 along the track B.

In the same ground storage M there may also be a machine tool, such as for example a cutting machine T for cutting the panels P; in this case, the first movement apparatus 1 can also be used to arrange, by means of the aforementioned gripping device 15, the panels P on this sectioning machine T in order to obtain their sectioning.

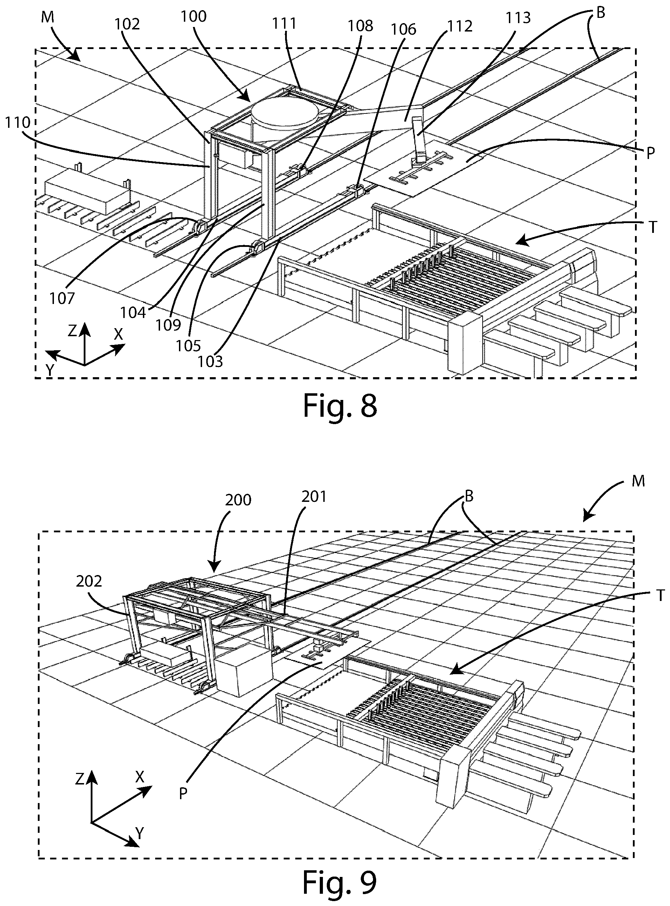

Referring now to figure 8, 100 indicates a second movement apparatus in accordance with a second embodiment of the present invention, for moving panels P stored in a ground storage M.

Specifically, the second movement apparatus 100 comprises a frame 102 comprising, in turn, a first lower longitudinal member 103, and a second lower longitudinal member 104, on which there are respectively mounted, in a rotatable manner, a first pair of wheels 105, 106 and a second pair of wheels 107, 108, configured to move along a track B according to a first axis X.

The frame 102 also includes a first upright 109 and a second upright 110, which rise vertically, according to a third axis Z, orthogonal to said first axis X, respectively from the first longitudinal member 103, and the second lower longitudinal member 104.

At the top of the two uprights 109, 110 there is an upper frame 111, which forms part of the frame 102.

A rigid arm 112, which protrudes laterally from the frame 102 itself, is connected to the upper part of the frame 102 in a rotatable manner along an axis parallel to the third axis Z.

A gripping device 113, identical to that described above in relation to the first movement apparatus 1, is mounted in a movable way, substantially along the entire extension of the arm 112.

Thanks to the possibility of moving the frame 102 along the first axis X , of the rotation of the arm 112, of the displacement of the gripping device 113 along the same arm 112, of the movement of the gripping device 113 along the third axis Z, the aforesaid second movement apparatus 100 allows operating the movement of panels P in a large area of the ground storage M, both in areas outside the track B and inside it, or between the two rails that compose it.

Also in this case, a machine tool may be present in the ground storage M, such as for example a cutting machine T for cutting the panels P; therefore, the second movement apparatus 100 can also be used to position the panels P on this machine tool or pick them up from it.

The figure shows a third movement apparatus 200, according to the present invention, identical to the first movement apparatus 1, apart from the fact that the transverse structure 201 is movable with respect to the frame 202 according to the second axis Y, in such a way as to protrude, in both its end-of-stroke positions, on one side of the frame 202 only.

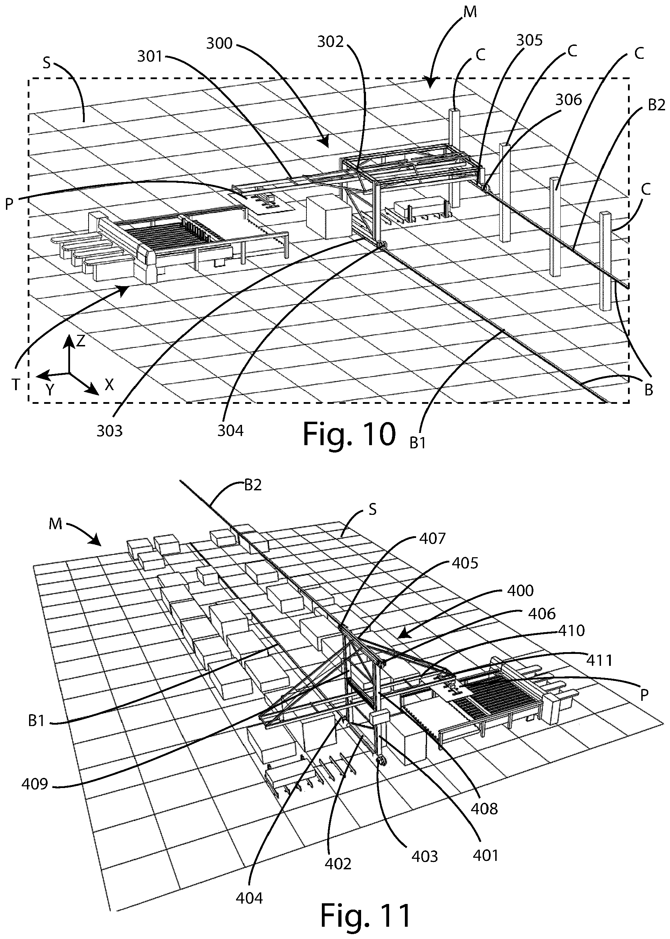

Figure 10 instead shows a fourth movement apparatus 300, according to the present invention, having a structure similar to that of the first movement apparatus 1 described above, for example except that the transverse structure 301 is fixed to the frame 302, so as to protrude from one side only, and the fact that the first lower longitudinal member 303, with its two wheels 304 (the other wheel is not visible in figure 10 ) and the second lower longitudinal member 305 with the respective two wheels 306 (the other wheel is not visible in figure 10) are arranged at different heights along the third axis Z as a rail B1 of the track B is fixed to the ground S and the other rail B2 is fixed to a row of support columns C arranged along the first axis X.

Referring now instead to figure 11, with 400 it is indicated, as a whole, a fifth movement apparatus according to the present invention, for moving panels P stored in a ground storage M.

In this case, the track B, which develops along the first axis X, is arranged on a plane substantially orthogonal to the ground S of the aforementioned ground storage M.

Specifically, a first rail B1 of this track B is fixed to the ground S while the other rail or the second rail B2 of the same track B is fixed to suitable support means (not shown) vertically above said first rail B1.

The fifth movement apparatus 400 includes a frame 401, which in turn comprises a lower longitudinal member 402 carrying two wheels 403, 404 movably engaged on said first rail B1, and an upper longitudinal member 405, on which further two wheels are rotatably mounted 406, 407, movably engaged on said second rail B2.

The same frame 401 also comprises two uprights 408, 409 parallel to the third axis Z, spaced apart according to the first axis X and both joined, at the bottom, to the lower side member 402 and, at the top, to the upper side member 405.

A transverse structure 410 directed along the second axis Y is rigidly connected to the upper part of the frame 401.

A gripping device 411 is mounted on the transverse structure 410 in a movable manner along the second axis Y substantially along the entire extension of said transverse structure 410.

Such gripping device 411 is identical to that described above in relation to the first movement apparatus 1, and performs the same function of allowing the gripping of a panel P.

The fifth movement apparatus 400 can therefore move, as a whole, on track B (which in this case is arranged vertically, i.e. on a plane orthogonal to the ground S) along the first axis X.

The relative gripping device 411 can instead move on the transversal structure 410, in such a way as to be able to reach both areas arranged on opposite sides of the track B.

The aforementioned first 1, second 100, third 200, fourth 300 and fifth 400 movement apparatus form, together with the relative track B, a respective system for moving panels or similar workpieces in a ground storage.

In the attached figures, X, Y and Z axes always represent a set of three orthogonal Cartesian axes.

As appears from the above description, the movement apparatus according to the various embodiments of the present invention is highly flexible in terms of its use possibilities and allows operating the movement of panels or similar objects, between different areas of the same. storage, quickly and efficiently.

This movement apparatus is also easy to manufacture and install.

Moreover, the same movement apparatus has a structure such that it can be modified, if necessary, in a simple and rapid way after the relative initial installation.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Movement system (1, B; 100, B; 200, B; 300, B; 400, B) comprising:
- at least one track (B) directed along a first axis (X), said at least one track (B) comprising at least a first rail (B1) fixed to a portion of ground (S) and at least a second rail (B2) parallel to said at least a first rail (B1) and positioned at a predetermined distance from said at least a first rail (B1);
- a movement apparatus (1; 100; 200; 300; 400) for moving panels (P) or similar pieces, comprising:
• a carriage (2, 5, 6, 7, 8; 102, 105, 106, 107, 108; 200; 300, 304, 306; 400, 403, 404, 406, 407) where at least a first face (2a) is defined, said carriage (2, 5, 6, 7, 8; 102, 105, 106, 107, 108; 200; 300, 304, 306; 400, 403, 404, 406, 407) being positioned on said at least one track (B) and being movable along said first axis (X), said at least a first face (2a) being transversal to the ground (S) when said carriage (2, 5, 6, 7, 8; 102, 105, 106, 107, 108; 200; 300, 304, 306; 400, 403, 404, 406, 407) is positioned on said at least one track (B);
• at least one cross member (14; 112; 201; 301; 410) connected to said carriage (2, 5, 6, 7, 8; 102, 105, 106, 107, 108; 200; 300, 304, 306; 400, 403, 404, 406, 407) in such a way as to protrude from said at least a first face (2a) of said carriage (2, 5, 6, 7, 8; 102, 105, 106, 107, 108; 200; 300, 304, 306; 400, 403, 404, 406, 407); and
• at least one gripping device (15; 113; 411) for gripping at least one panel (P) or similar piece, wherein said at least one gripping device (15; 113; 411) is connected to said at least one cross member (14; 112; 201; 301; 410) and comprises at least one gripping member (16) configured to engage, in use, with said at least one panel (P) or similar piece in a removable manner, said at least one gripping device (15; 113; 411) being also movable with respect to said carriage (2, 5, 6, 7, 8; 102, 105, 106, 107, 108; 200; 300, 304, 306; 400, 403, 404, 406, 407) in such a way as to allow, in use, the movement of at least one panel (P) or similar piece.

2. Movement system (1, B; 400, B) according to claim 1, **characterised in that** in said carriage (2, 5, 6, 7, 8; 400, 403, 404, 406, 407) at least a second face (2b) opposite to said first face (2a) is defined, and **in that** said at least one cross member (14; 410) protrudes from said at least a second face (2b) of said carriage (2, 5, 6, 7, 8; 400, 403, 404, 406, 407).

3. Movement system (1, B; 200, B; 300, B; 400, B) according to claim 1, **characterised in that** in said carriage (2, 5, 6, 7, 8; 400, 403, 404, 406, 407) at least a second face (2b) opposite to said first face (2a) is defined, and **in that** said movement system (1, B; 200, B; 300, B; 400, B) comprises at least a second cross member which is different from said at least one cross member (14; 410) and projects from said at least a second face (2b) of said carriage (2, 5, 6, 7, 8; 400, 403, 404, 406, 407).

4. Movement system (1, B; 200, B; 300, B; 400, B) according to any one of the preceding claims, **characterised in that** said at least one cross member (14; 201; 301; 410) is connected with said carriage (2, 5, 6, 7, 8; 200; 300, 304, 306; 400, 403, 404, 406, 407) in a rigid or movable way along a second axis (Y) substantially orthogonal to said first axis (X).

5. Movement system (1, B; 100, B; 200, B; 300, B; 400, B) according to any one of the preceding claims, **characterised in that** said at least one cross member (14; 112; 201; 301; 410) has a main direction of extension, and **in that** said at least one gripping device (15; 113; 411) is connected with said at least one cross member (14; 112; 201; 301; 410) in a movable way along said main direction of extension.

6. Movement system (1, B; 100, B; 200, B; 300, B; 400, B) according to claim 5, **characterised in that** said at least one gripping device (15; 113; 411) is movable according to a substantially vertical third axis (Z).

7. Movement system (1, B; 100, B; 200, B; 300, B; 400, B) according to any one of the preceding claims, **characterised in that** said at least one gripping device (15; 113; 411) comprises an articulated arm (17) equipped with actuator means.

8. Movement system (100, B) according to claim 1, **characterised in that** said at least one cross member (112) is rotatable around a third axis (Z) substantially orthogonal to said first axis (X).

9. Movement system (1, B; 100, B; 200, B; 300, B; 400, B) according to any one of the preceding claims, **characterised in that** said movement apparatus (1; 100; 200; 300; 400) comprises sensor means for detecting the presence of obstacles along said track (B).

10. Movement system (1, B; 100, B; 200, B; 300, B) according to any one of the preceding claims, **characterised in that** said at least a second rail (B2) is fixed to a portion of said ground (S) parallel to said at least a first rail (B1).

11. Movement system (300, B) according to any one of claims 1 to 9, **characterised in that** said at least a second rail (B2) is positioned on a plane parallel to said ground (S) and spaced from said ground (S).

12. Movement system (400, B) according to any one of claims 1 to 9, **characterised in that** said at least a second rail (B2) is positioned above said at least a first rail (B1); wherein said at least a first rail (B1) and said at least a second rail (B2) lie on a plane substantially orthogonal to said ground (S).

13. Movement system (1, B; 100, B; 200, B; 300, B; 400, B) according to any one of the preceding claims, **characterised in that** said at least one gripping member comprises a suction cup (16).
